# EUROPEAN PATENT SPECIFICATION

(11) **EP 2 030 463 B1**
(45) Date of publication and mention of the grant of the patent: **02.11.2016**
(21) Application number: 07765916.7
(22) Date of filing: 12.06.2007
(51) Int. Cl.: H04L 12/66, H04W 24/04, H04L 12/24, H04L 12/26

(54) **A METHOD, A SYSTEM AND A COMPUTER PROGRAM PRODUCT FOR TROUBLESHOOTING**
VERFAHREN, SYSTEM UND COMPUTERPROGRAMMPRODUKT ZUR FEHLERBEHEBUNG
PROCÉDÉ, SYSTÈME ET PROGRAMME INFORMATIQUE DE DÉPANNAGE

(30) Priority: 21.06.2006 FI 20065428
(43) Date of publication of application: 04.03.2009
(73) Proprietor: Telia Company AB, 169 94 Solna (SE)
(72) Inventor: VÄLIMAA, Harri, 36200 Kangasala (FI); NIEMI, Eetu, 33200 Tampere (FI)
(74) Representative: Tampereen Patenttitoimisto Oy
(86) International application number: PCT/FI2007/050350
(87) International publication number: WO 2007/147936

(56) References cited:
- WO-A2-01/82571
- CA-A1- 2 412 259
- US-A1- 2002 072 359
- US-A1- 2002 133 575
- US-A1- 2002 144 187
- US-A1- 2004 066 747
- US-A1- 2004 153 792
- US-A1- 2005 015 644
- US-A1- 2006 087 978
- US-B1- 6 697 969
- US-B1- 7 020 598

## Description

### Field of the Invention

This invention relates to a method for service troubleshooting in a network and to a system for service troubleshooting in a network. In addition the invention relates to a computer program product. The invention also relates to a method for troubleshooting in a customer service and to a system for troubleshooting.

### Background of the Invention

It is expected that a mobile network and a fixed broadband network will converge. This means that a user of a multi-access terminal can be in contact with more than one network at the same time. Such multi-access terminals have been introduced to the market. Conventionally the user has had to switch the network e.g. from GSM (Global System for Mobile Communications) to UMTS (Universal Mobile Telecommunications System). Due to the convergence it is possible to provide new and to improve the existing end-to-end services. In addition operator costs can be reduced, because co-operation (the traditional way) between the fixed broadband network and the mobile network can be minimized. Co-operation means that, for example, VoIP (Voice over Internet Protocol) services will be possible with the mobile terminal.

Generally, it is possible to troubleshoot the communication network, e.g. its condition and functionality, because problems occurring in the communication network will remain and be stored in those network components where the problem has occurred. Therefore, the operator can track the problem and eliminate the cause for it. According to the applicant's knowledge, there is no built-in system for controlling traffic in a fixed IP (Internet Protocol) network. However, if problems need to be tracked in the IP network, special polling methods can be used, or network state can be queried. In the case of end-to-end services it is necessary to pay attention to the functionality and quality between the ends in order to solve whether the complete end-to-end is not working or whether only part of it is not working. End-to-end testing is based on the emulation of the behaviour of a user's terminal on those interfaces where the terminal is connected to the network. It can be realized that testing from a operator's point of view is different than testing from a client's point of view. This is a result of asymmetric networks, such as ADSL (Asymmetric Digital Subscriber Line), where data and services are transmitted to different directions with different rates.

If speech is transmitted in the data network for corporate systems, it is possible to test and search problems by means of separate control systems. In practice the testing process is implemented in such a manner that a separate testing device is taken to corporate premises, by means of which a test is run and causes to problems are searched for. Obviously this kind of testing is expensive, and thus more suitable for corporate systems than for private customers. Because the number of private customers is large, it would become more difficult to charge such testing from the private customers. A typical problem that occurs in the traditional testing relates to firewall settings. Because firewall settings are not symmetrical, traffic is allowed to one direction, but not to another.

A publication CA 2 412 259 discloses a method for network service diagnostics. The method comprises receiving a request from a user of a computer for assistance in an activity performed by the computer. Responsive to the request, an executable program module is downloaded to the computer over a communication network, which module, when run buy the computer, causes the computer to perform a diagnostic operation including sending one or more messages over the network. The messages sent by the computer while the computer is running the module are received and processed, in order to extract diagnostic information from the message so as to diagnose a problem in the activity performed by the computer.

Currently there are numerous methods for testing VoIP quality from a personal computer's point of view. This kind of a VoIP quality testing is active testing, which precisely simulate user-level transactions. The testing is carried out to a certain destination that is selected from menu options by the user, and thus the location is not necessarily the actual target for the communication. It can thus be realized that this kind of a method gives only an assumption of the destination, and therefore the testing will be implemented not to the actual target, but to the selected target.

Therefore, what is needed is a solution for troubleshooting end-to-end services from an exact location to another exact location and by taking into account actual customer data.

### Summary of the Invention

The current invention is addressed to such a need, and provides a self-management testing solution for fixed network troubleshooting, whereby the customer can diagnose the problem either together with calling customer service (so-called helpdesk) or even without calling customer service. According to that, the testing will be implemented from the customer's side. This solution is achieved by a method, a system and a computer program product.

The method for service troubleshooting in a network, wherein a terminal comprises a troubleshooting software, and wherein the terminal is configured to connect to a home network providing a connection to a service, to a server via another network and to a multi-access device, wherein the method further comprises delivering service-related parameters to the terminal comprising the troubleshooting software; terminating a connection to the server after receiving the service-related parameters and retrieving an IP address from the multi-access device, which IP address is valid as long as the testing lasts; executing the troubleshooting by the troubleshooting software of the terminal with said service-related parameters in order to emulate said service and to have first results of the troubleshooting; executing a simultaneous troubleshooting by a monitoring probe of the service to have second results of the troubleshooting; and correlating the first results and the second results.

The system for service troubleshooting in a network, comprising at least a home network, a server, a terminal and a multi-access device, said terminal being adapted to connect to said home network providing a connection to a service, to the server via another network and to the multi-access device, wherein the terminal comprises a troubleshooting software; the server is configured to deliver service-related parameters to the terminal; the terminal is configured to terminate a connection to the server after receiving the service-related parameters and to retrieve an IP address from the multi-access device, which IP address is valid as long as the testing lasts; the terminal is arranged to execute troubleshooting by the troubleshooting software with said service-related parameters in order to emulate said service and to have first results of the troubleshooting; a monitoring probe of the service is arranged to execute a simultaneous troubleshooting to have second results of the troubleshooting; and the server is configured to correlate the first results and the second results.

The computer program product for a system comprising a terminal and a server, said terminal being adapted to connect to a home network providing a connection to a service, to a multi-access device and to a server via another network, said computer program product comprising code means stored on a readable medium, adapted, when run on a computer, to troubleshoot service in a network, characterized in that the code means are adapted to deliver service-related parameters to the terminal comprising the troubleshooting software; to terminate a connection to the server after receiving the service-related parameters and to retrieve an IP address from the multi-access device, which IP address is valid as long as the testing lasts; to execute the troubleshooting by the troubleshooting software of the terminal with said service-related parameters in order to emulate said service and to have first results of troubleshooting; to execute a simultaneous troubleshooting by a monitoring probe of the service to have second results of the troubleshooting; and to correlate the first results and the second results.

In the invention the terminal is used as a probe, which makes it possible only to troubleshoot e.g. network and leave possible configuration problems of the user's personal computer out from the troubleshooting. The software pretends to be a certain service, whereby a similar troubleshooting is activated in the software. The similar troubleshooting means that network points, *i.e.* predefined activation points, relating to said certain problem are the target for the troubleshooting. When the troubleshooting is carried out, the terminal is informed of a result of the troubleshooting. In addition to the results, also instructions on how to proceed with the result can be informed to the terminal. In some situations, the troubleshooting result may be transmitted to a server from the terminal.

The troubleshooting software can be downloaded to the terminal along with service-related parameters that can be delivered to the terminal via a mobile network, or the troubleshooting software can be permanently installed in the terminal. The terminal is connected to a multi-access device through which the troubleshooting is executed. The troubleshooting software can be executed by a launching command from a user, or from a WWW (World Wide Web) or WAP (Wireless Application Protocol) page, or from the server.

In the invention other troubleshooting can also be carried out along with the terminal by a monitoring probe.

By means of the invention the work load at the customer service can be reduced, because simple problems can be corrected by the customer. However, the current invention is also helpful for difficult problems, because when the customer connects to the customer service, the troubleshooting has already been done or started. Therefore the customer service can only analyse the results or utilize them further in more detailed testing.

The testing is user-friendly and does not require special education for carrying it out. This invention provides good value to the customer service when the self-management testing is processed beside the customer service. It will be appreciated that a completely automatic solution would not necessarily provide all the benefit, because some problems can be solved only by the customer service.

### Description of the Drawings

The current invention is illustrated by means of the following drawings, where
- Figure 1: illustrates an example of the system configuration according to the present invention, and
- Figure 2: illustrates another example of the system configuration according to the present invention.

### Detailed Description of the Invention

The purpose of the present invention is to make it possible to implement service troubleshooting with a customer's terminal. This means that network events, such as fixed services can be tested by means of the terminal using said services. In the present description the term "customer" relates to a subscriber of the operator network, a user of the terminal and to a customer of the service. Therefore the term customer should be considered as broad as possible. The term "service" relates to a service, a part of the service or a network quality, and the service is subscribed by the customer. A "terminal" in this context is a multi-access terminal providing at least both mobile and home network (LAN) connectivity. Multi-access means that the terminal is capable of simultaneous voice/packet communications. For example, the customer can communicate e.g. by voice while using packet transmission. The service troubleshooting performs e.g. active (i.e. generates test traffic) availability and performance tests relating to certain services and networks. Examples of services and networks are e.g. such as IP (Internet Protocol) connectivity, DNS (Domain Name System), DHCP (Dynamic Host Configuration Protocol), Radius, email, WWW (World Wide Web), VoIP (Voice Over IP) and UMA (Unlicensed Mobile Access). What is to be tested is determined according to what has been sold to the customer and where the problem has occurred. For example, if the customer has ordered an email service and VoIP service, the testing can be targeted to them. Similarly, the testing can be targeted to such networks to which the customer is subscribed. For these tests the only information that is needed is information on the services the customer is capable of using. If the problem in question relates to an operating system of the terminal or to a terminal's model, then information on which terminal is used and what is the operating system in the terminal is needed for testing. In other cases the information on the terminal is unnecessary, and therefore almost any multi-access terminal can utilize the current invention.

At the time the customer notices a problem occurring e.g. with the terminal, with the fixed network connection or with the service, the customer may form a connection to the customer service via a mobile network. The customer may have troubleshooting software installed already or the troubleshooting software can be installed at this point. The troubleshooting software is deployed at the terminal in order to carry out the troubleshooting. The software can be a permanently installed client, a network downloadable java applet, a software component, a plugin, a packet or the like. The customer is identified at the customer service, whereby the customer service can automatically see what services the customer can use, and what kind of service-related parameters should be used in the troubleshooting software. The customer can be identified by SIM information or by other means, for example, if a fixed network is used.

In order to inform of a problem to the customer service the customer can use a graphical user interface relating to the troubleshooting software and make selections in a menu presented in the interface. The view of the interface can vary dynamically according to the customer's characteristics. For example, if the customer selects a "Network problem" from the menu, then the varying options could concern e.g. Internet-based problems or problems relating to forming a connection (e.g. is IP-address received) or WLAN. The user interface can also be used for activating the troubleshooting process and for reporting results.

The service-related parameters for what will be tested and how the troubleshooting process should be carried out are delivered to the troubleshooting software by the central server, e.g. customer service. The service-related parameters can be considered as test instructions relating to a certain problem of a certain service according to which the troubleshooting can take place. The communication between the terminal and the central server may take place via mobile data services, e.g. such as GPRS, GSM/3G circuit switched (cs) data, SMS (Short Message Service) or IM (Instant Message). In the case of mobile packet data or circuit switch data (GPRS, GSM/3G cs data) the terminal needs to open the data connection to the central server. In the messaging situation (SMS, IM) the instructions can be given directly to the terminal or the central service may ask the terminal to open the mobile data connection to the central server. For security reasons it would be better if the terminal did not communicate with the central server at the same time as the terminal is performing the troubleshooting. Therefore, after the terminal has the service related parameters, the connection to the central server is terminated and the terminal connects to the home network. When the troubleshooting has been performed, the terminal terminates the connection to the home network and reconnects to the central server in order to report the measurement results.

The software can be used either as a customer activated tool or an operator's helpdesk activated remote management tool. In both cases the testing is about self-management troubleshooting relating to the fact that it is implemented from the customer's side. There are different possibilities to start the troubleshooting when the troubleshooting software has already been installed to the terminal. One possibility for the customer is to give a launching command to the troubleshooting software by using the software's embedded user interface, e.g. graphical or text-based, after which the troubleshooting software connects to the central server in order to get the service-related parameters as described above. If a downloadable troubleshooting software client, a java applet, a software component, a plugin, a packet or the like is used, the customer must download that first. When the troubleshooting activation is done by the customer, the service operator may require acceptance from the customer.

Another possibility for the customer is to activate the troubleshooting process by visiting a Web or WAP launching page, which then starts the communication between the terminal and the central server as described above. This communication transmits a launching command to the terminal and automatically activates the troubleshooting software at the customer's terminal if the customer has not started it manually. If a downloadable troubleshooting software client or a java applet is used, the first step is to push it to the terminal or ask the customer to download it.

Yet another possibility for the customer is to visiting a Web or WAP launching page and to let the service operator's representative activate the troubleshooting process, which starts the communication between the terminal and the central server as described above. This communication may require the customer's acceptance especially if the aim is to launch the troubleshooting software automatically at the customer's terminal. When downloadable troubleshooting software is used, the first step is to push that to the terminal or to ask the customer to download it.

If the problem occurred is not in the customer's terminal but more likely in the IP-network, the customer service may ask for the IP-address in question, by means of which it can allow testing for a limited time from the terminal to said IP-address. The helpdesk may open activation points in the network, after which it can modify and monitor them and check log files. If the problem is in the access to a certain server, accesses to other servers can be tested after firewalls are closed.

The troubleshooting software generates tests by using the service-related parameters, through the same networks and connections as the customer normally uses and aims to find out whether the services and networks are working correctly. It will be appreciated that by using the service-related parameters, the software actually emulates a certain service and routes, parameters, functions and network protocols used by the service, or by the terminal. The troubleshooting may take place through the home network that is connected to a multi-access device, CPE (Customer Premise Equipment, e.g. ADSL router). This requires that the multi-access terminal supports fixed or wireless LAN technology (e.g. WLAN) and is capable of joining the LAN.

The troubleshooting results are informed to the customer by the user interface. If the solution to the problem is straightforward and the customer is expected to take the necessary actions to correct it, the guidance to the customer can be given via the user interface. However, if the problem is more complicated, and it would be difficult for the customer to correct it, the instructions to the customer can include a request to call the customer service. In this case, the provided customer service number can be different than the publicly shared customer service number. By calling such a number, the customer service already knows whether the customer has made the tests already. If so, all the requested information (i.e. results) can be provided to the customer service computer, and the customer can be helped more efficiently. It is also possible to ask e.g. a code number from the customer, whereby the customer service will be confident that the preliminary troubleshooting has been done. It is understood that because the troubleshooting result is sent to the customer service, the customer service can act more quickly and effectively for solving the problem.

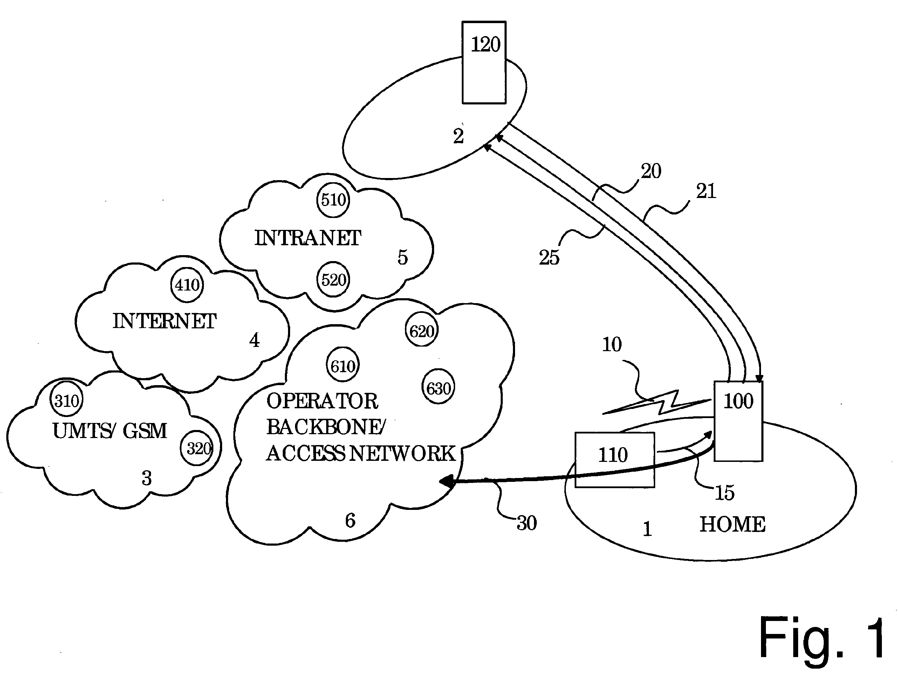

Figure 1 illustrates an example of a system comprising a multi-access terminal 100 and a customer service's central server 120. The terminal 100 may comprise troubleshooting software or the terminal 100 can be capable of fetching one from the central server 120. When testing is needed, the customer can launch (20) the software manually in the terminal 100. It is also possible that the customer service (2) launches (20) the troubleshooting software by SMS, IM or asks the customer to activate it and possibly gives a one-time activation code. For security reasons the connection to the server is terminated when the troubleshooting software is launched. The IP is transmitted to the server by means of other connections, such as SMS or IP connection. When the troubleshooting software is launched, it retrieves (21) service-related parameters and sequence description from the central server 120 by opening a mobile data connection to the server 120. It is also possible that the terminal 100 receives e.g. SMS or IM which contains the necessary service-related parameters for testing.

When the parameters are received, the terminal terminates the possible connection to the central server 120 and retrieves (15) an IP address from a multi-access device's (110) DHCP, which IP address is valid as long as the testing will last. After that the terminal 100 connects to the customer's home network (1). The terminal 100 and the multi-access device 110 may have a wireless connection (10), such as Bluetooth, Wireless USB, WLAN etc. The troubleshooting (30) is carried out through the customer's home network (1) to activation points (310, 320, 410, 510, 520, 610, 620, 630), such as network resources, test probes and the customer services in networks 3, 4, 5, 6, such as UMTS/GSM, Internet, corporate intranet and operator backbone/access network. When the troubleshooting has been carried out, the results are received in the terminal 100. The connection to the customer service 2 is formed again, and the results are sent (25) to central server 120 via e.g. SMS, IM or mobile data. Due to the results the terminal 100 receives instructions on what should be done to correct the problem.

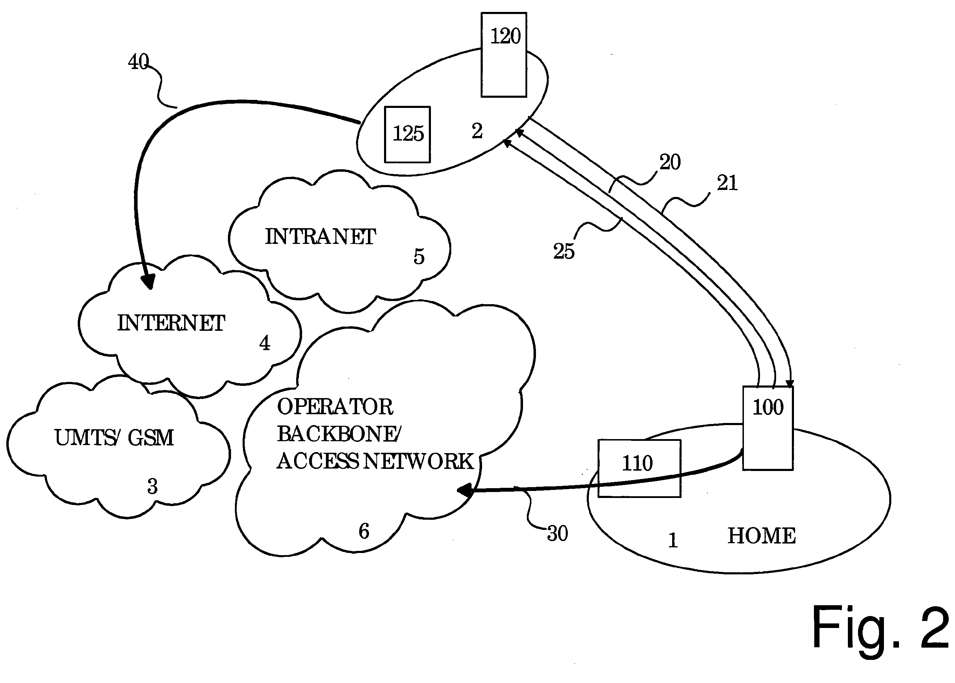

Figure 2 illustrates another example, which is very similar to the one presented in figure 1. However, in figure 2 the troubleshooting procedure is collaborative. This means that the customer service 2 also comprises a monitoring probe 125 that is capable of performing (40) troubleshooting as well. The troubleshooting (40) performed by the monitoring probe 125 is carried out from the network's perspective, and therefore the testing will be expanded. For example, at the same time as the terminal 100 is running the troubleshooting (30), the monitoring probe 125 also runs another troubleshooting (40). By doing this the results from the monitoring probe 125 and the results from the terminal 100 can be correlated, which further improves the central server accuracy and efficiency of the measurement and troubleshooting.

Compared to conventional solutions, instead of sending an actual mechanic to a customer's home to solve the problem, the current solution where the troubleshooting procedure is performed automatically and is started by the customer, will be a great benefit for operators both economically and for helping the work load of customer service and mechanics.

The foregoing detailed description is provided for clarity of understanding only, and should not be interpreted as restrictive to the invention presented in the claims hereinbelow.

## Claims

1. A method for service troubleshooting in a network (4, 5, 6), wherein a terminal (100) comprises a troubleshooting software, and wherein the terminal (100) is configured to connect to a home network (1) providing a connection to a service, to a server (120) via another network and to a multi-access device (110), **characterized in that** the method further comprises
a. delivering service-related parameters to the terminal (100) comprising the troubleshooting software;
b. terminating a connection to the server (120) after receiving the service-related parameters and retrieving an IP address from the multi-access device (110), which IP address is valid as long as the testing lasts;
c. executing the troubleshooting (30) by the troubleshooting software of the terminal (100) with said service-related parameters in order to emulate said service and to have first results of the troubleshooting;
d. executing a simultaneous troubleshooting (40) by a monitoring probe (125) of the service to have second results of the troubleshooting; and
e. correlating the first results and the second results.

2. The method according to claim 1, **characterized in that**, unless the troubleshooting software has been installed to the terminal (100), the troubleshooting software is downloaded to the terminal (100) along the service-related parameters.

3. The method according to claim 1 or 2, **characterized in that**, troubleshooting is targeted to predefined activation points (310, 320, 410, 510, 520, 610, 620, 630) in the network (4, 5, 6), said activation points relating to at least one of the following: network resource, test probe, customer service, mobile network, internet, corporate intranet, operators backbone, access network.

4. The method according to any of the claims 1 to 3, **characterized in that**, the terminal (100) is informed by the troubleshooting software of a result of the troubleshooting optionally with the instructions on how to proceed with the result.

5. The method according to any of the claims 1 to 4, **characterized in that** the troubleshooting is executed from the terminal (100) through the multi-access device (110) in the home network (1) which multi-access device is configured to connect with more than one network at the same time.

6. The method according to any of the claims 1 to 5, **characterized in that** the troubleshooting software is executed by a launching command from a user, from a WWW or a WAP page or from a server (120).

7. The method according to any of the claims 1 to 6, **characterized in that** another troubleshooting is carried out along with the terminal (100) by a monitoring probe (125).

8. The method according to any of the claims 1 to 7, **characterized in that** the service-related parameters are delivered to the terminal (100) via a mobile network.

9. The method according to claim 4, **characterized in that** a customer service and/or the server (120) is informed of the result of the troubleshooting.

10. A system for service troubleshooting in a network (4, 5, 6), comprising at least a home network (1), a server (120), a terminal (100) and a multi-access device (110), said terminal (100) being adapted to connect to said home network (1) providing a connection to a service, to the server (120) via another network and to the multi-access device, **characterized in that**
a. the terminal (100) comprises a troubleshooting software;
b. the server (120) is configured to deliver service-related parameters to the terminal (100);
c. the terminal (100) is configured to terminate a connection to the server (120) after receiving the service-related parameters and to retrieve an IP address from the multi-access device (110), which IP address is valid as long as the testing lasts;
d. the terminal (100) is arranged to execute troubleshooting (30) by the troubleshooting software with said service-related parameters in order to emulate said service and to have first results of the troubleshooting;
e. a monitoring probe (125) of the service is arranged to execute a simultaneous troubleshooting (40) to have second results of the troubleshooting; and
f. the server (120) is configured to correlate the first results and the second results.

11. The system according to claim 10, **characterized in that** the terminal (110) is adapted to download the troubleshooting software along the service-related parameters.

12. The system according to claim 10 or 11, **characterized in that** the system is arranged to target the troubleshooting to predefined activation points (310, 320, 410, 510, 520, 610, 620, 630) in the network (4, 5, 6), said activation points relating to at least one of the following: network resource, test probe, customer service, mobile network, internet, corporate intranet, operators backbone, access network.

13. The system according to claim 10, 11 or 12, **characterized in that** the troubleshooting software is adapted to inform the terminal (100) of a result of the troubleshooting optionally with the instructions on how to proceed with the result.

14. The system according to any of the claims 10 to 13, **characterized in that** the system is arranged to execute the troubleshooting via the multi-access device (110), which multi-access device is configured to connect with more than one networks at the same time.

15. The system according to any of the claims 10 to 14, **characterized in that** the terminal (100) is arranged to execute the troubleshooting software by a launching command from a user or by a launching command from a WWW or a WAP page or a launching command from the server.

16. The system according to any of the claims 10 to 15, **characterized in that** the system comprises a monitoring probe (125) for carrying out troubleshooting along with the terminal (100).

17. The system according to any of the claims 10 to 16, **characterized in that** the server (120) is adapted to deliver the service-related parameters to the terminal (100) via a mobile network.

18. The system according to any of the claims 13 to 17, **characterized in that** the terminal (100) is adapted to inform the customer service and/or the server (120) of the result of the troubleshooting.

19. A computer program product for a system comprising a terminal (100) and a server (120), said terminal (100) being adapted to connect to a home network (1) providing a connection to a service, to a multi-access device (110) and to a server (120) via another network, said computer program product comprising code means stored on a readable medium, adapted, when run on a computer, to troubleshoot service in a network (4, 5, 6), **characterized in that** the code means are adapted
a. to deliver service-related parameters to the terminal (100) comprising the troubleshooting software;
b. to terminate a connection to the server (120) after receiving the service-related parameters and to retrieve an IP address from the multi-access device (110), which IP address is valid as long as the testing lasts;
c. to execute the troubleshooting (30) by the troubleshooting software of the terminal (100) with said service-related parameters in order to emulate said service and to have first results of troubleshooting;
d. to execute a simultaneous troubleshooting (40) by a monitoring probe (125) of the service to have second results of the troubleshooting; and
e. to correlate the first results and the second results.

## Patentansprüche

1. Verfahren zur als Dienst erfolgenden Fehlerbehebung in einem Netz (4, 5, 6), wobei ein Endgerät (100) eine Fehlerbehebungssoftware umfasst und wobei das Endgerät (100) dafür konfiguriert ist, sich mit einem eine Verbindung zu einem Dienst bereitstellenden Heimnetz (1), mit einem Server (120) über ein anderes Netz und mit einem Mehrfachzugriffsgerät (110) zu verbinden, **dadurch gekennzeichnet, dass** das Verfahren ferner Folgendes umfasst:
a. Übermitteln von dienstbezogenen Parametern an das Endgerät (100), das die Fehlerbehebungssoftware umfasst;
b. Beenden einer Verbindung zum Server (120) nach dem Empfang der dienstbezogenen Parameter und Abrufen einer IP-Adresse aus dem Mehrfachzugriffsgerät (110), wobei die IP-Adresse gültig ist, solange die Prüfung dauert;
c. Ausführen der Fehlerbehebung (30) durch die Fehlerbehebungssoftware des Endgeräts (100) mit den dienstbezogenen Parametern, um den Dienst zu emulieren und erste Ergebnisse der Fehlerbehebung zu bekommen;
d. Ausführen einer gleichzeitigen Fehlerbehebung (40) durch eine Überwachungssonde (125) des Dienstes, um zweite Ergebnisse der Fehlerbehebung zu bekommen; und
e. Korrelieren der ersten Ergebnisse und der zweiten Ergebnisse.

2. Verfahren nach Anspruch 1, **dadurch gekennzeichnet, dass,** sofern die Fehlerbehebungssoftware im Endgerät (100) installiert worden ist, die Fehlerbehebungssoftware zusammen mit den dienstbezogenen Parametern zum Endgerät (100) heruntergeladen wird.

3. Verfahren nach Anspruch 1 oder 2, **dadurch gekennzeichnet, dass** die Fehlerbehebung vordefinierte Aktivierungspunkte (310, 320, 410, 510, 520, 610, 620, 630) im Netz (4, 5, 6) anvisiert, wobei die Aktivierungspunkte mindestens einen der folgenden betreffen: Netzressource, Testsonde, Kundendienst, Mobilfunknetz, Internet, firmeninternes Intranet, Netzbetreiber-Backbone, Zugangsnetz.

4. Verfahren nach irgendeinem der Ansprüche 1 bis 3, **dadurch gekennzeichnet, dass** das Endgerät (100) durch die Fehlerbehebungssoftware über ein Ergebnis der Fehlerbehebung gegebenenfalls mit den Anweisungen darüber, wie mit dem Ergebnis zu verfahren ist, informiert wird.

5. Verfahren nach irgendeinem der Ansprüche 1 bis 4, **dadurch gekennzeichnet, dass** die Fehlerbehebung von dem Endgerät (100) aus über das Mehrfachzugriffsgerät (110) im Heimnetz (1) ausgeführt wird, wobei das Mehrfachzugriffsgerät dafür konfiguriert ist, sich gleichzeitig mit mehr als einem Netz zu verbinden.

6. Verfahren nach irgendeinem der Ansprüche 1 bis 5, **dadurch gekennzeichnet, dass** die Fehlerbehebungssoftware durch einen Startbefehl von einem Benutzer, von einer WWW- oder einer WAP-Seite oder von einem Server (120) ausgeführt wird.

7. Verfahren nach irgendeinem der Ansprüche 1 bis 6, **dadurch gekennzeichnet, dass** eine andere Fehlerbehebung zusammen mit dem Endgerät (100) durch eine Überwachungssonde (125) durchgeführt wird.

8. Verfahren nach irgendeinem der Ansprüche 1 bis 7, **dadurch gekennzeichnet, dass** die dienstbezogenen Parameter über ein Mobilfunknetz an das Endgerät (100) übermittelt werden.

9. Verfahren nach Anspruch 4, **dadurch gekennzeichnet, dass** ein Kundendienst und/oder der Server (120) über das Ergebnis der Fehlerbehebung informiert werden.

10. System zur als Dienst erfolgenden Fehlerbehebung in einem Netz (4, 5, 6), umfassend mindestens ein Heimnetz (1), einen Server (120), ein Endgerät (100) und ein Mehrfachzugriffsgerät (110), wobei das Endgerät (100) daran angepasst ist, sich mit dem eine Verbindung zu einem Dienst bereitstellenden Heimnetz (1), mit dem Server (120) über ein anderes Netz und mit dem Mehrfachzugriffsgerät zu verbinden, **dadurch gekennzeichnet, dass:**
a. das Endgerät (100) eine Fehlerbehebungssoftware umfasst;
b. der Server (120) dafür konfiguriert ist, dienstbezogene Parameter an das Endgerät (100) zu übermitteln;
c. das Endgerät (100) dafür konfiguriert ist, eine Verbindung zum Server (120) nach dem Empfang der dienstbezogenen Parameter zu beenden und eine IP-Adresse aus dem Mehrfachzugriffsgerät (110) abzurufen, wobei die IP-Adresse gültig ist, solange die Prüfung dauert;
d. das Endgerät (100) derart angeordnet ist, dass es die Fehlerbehebung (30) durch die Fehlerbehebungssoftware mit den dienstbezogenen Parametern ausführt, um den Dienst zu emulieren und erste Ergebnisse der Fehlerbehebung zu bekommen;
e. eine Überwachungssonde (125) des Dienstes derart angeordnet ist, dass sie eine gleichzeitige Fehlerbehebung (40) ausführt, um zweite Ergebnisse der Fehlerbehebung zu bekommen; und
f. der Server (120) dafür konfiguriert ist, die ersten Ergebnisse und die zweiten Ergebnisse zu korrelieren.

11. System nach Anspruch 10, **dadurch gekennzeichnet, dass** das Endgerät (110) daran angepasst ist, die Fehlerbehebungssoftware zusammen mit den dienstbezogenen Parametern herunterzuladen.

12. System nach Anspruch 10 oder 11, **dadurch gekennzeichnet, dass** das System derart angeordnet ist, dass es die Fehlerbehebung vordefinierte Aktivierungspunkte (310, 320, 410, 510, 520, 610, 620, 630) im Netz (4, 5, 6) anvisieren lässt, wobei die Aktivierungspunkte mindestens einen der folgenden betreffen: Netzressource, Testsonde, Kundendienst, Mobilfunknetz, Internet, firmeninternes Intranet, Netzbetreiber-Backbone, Zugangsnetz.

13. System nach Anspruch 10, 11 oder 12, **dadurch gekennzeichnet, dass** die Fehlerbehebungssoftware daran angepasst ist, das Endgerät (100) über ein Ergebnis der Fehlerbehebung gegebenenfalls mit den Anweisungen darüber, wie mit dem Ergebnis zu verfahren ist, zu informieren.

14. System nach irgendeinem der Ansprüche 10 bis 13, **dadurch gekennzeichnet, dass** das System derart angeordnet ist, dass es die Fehlerbehebung über das Mehrfachzugriffsgerät (110) ausführt, wobei das Mehrfachzugriffsgerät dafür konfiguriert ist, sich gleichzeitig mit mehr als einem Netz zu verbinden.

15. System nach irgendeinem der Ansprüche 10 bis 14, **dadurch gekennzeichnet, dass** das Endgerät (100) derart angeordnet ist, dass es die Fehlerbehebungssoftware durch einen Startbefehl von einem Benutzer oder durch einen Startbefehl von einer WWW- oder einer WAP-Seite oder einen Startbefehl vom Server ausführt.

16. System nach irgendeinem der Ansprüche 10 bis 15, **dadurch gekennzeichnet, dass** das System eine Überwachungssonde (125) zur Durchführung der Fehlerbehebung zusammen mit dem Endgerät (100) umfasst.

17. System nach irgendeinem der Ansprüche 10 bis 16, **dadurch gekennzeichnet, dass** der Server (120) daran angepasst ist, die dienstbezogenen Parameter über ein Mobilfunknetz an das Endgerät (100) zu übermitteln.

18. System nach irgendeinem der Ansprüche 13 bis 17, **dadurch gekennzeichnet, dass** das Endgerät (100) daran angepasst ist, den Kundendienst und/oder den Server (120) über das Ergebnis der Fehlerbehebung zu informieren.

19. Computerprogrammprodukt für ein System, das ein Endgerät (100) und einen Server (120) umfasst, wobei das Endgerät (100) daran angepasst ist, sich mit einem eine Verbindung zu einem Dienst bereitstellenden Heimnetz (1), mit einem Mehrfachzugriffsgerät (110) und mit einem Server (120) über ein anderes Netz zu verbinden, wobei das Computerprogrammprodukt auf einem lesbaren Medium gespeicherte Codemittel umfasst, die, wenn sie auf einem Computer laufen, daran angepasst sind, einen Fehlerbehebungsdienst in einem Netz (4, 5, 6) durchzuführen, **dadurch gekennzeichnet, dass** die Codemittel daran angepasst sind:
a. dienstbezogene Parameter an das Endgerät (100), das die Fehlerbehebungssoftware umfasst, zu übermitteln;
b. eine Verbindung zum Server (120) nach dem Empfang der dienstbezogenen Parameter zu beenden und eine IP-Adresse aus dem Mehrfachzugriffsgerät (110) abzurufen, wobei die IP-Adresse gültig ist, solange die Prüfung dauert;
c. die Fehlerbehebung (30) durch die Fehlerbehebungssoftware des Endgeräts (100) mit den dienstbezogenen Parametern auszuführen, um den Dienst zu emulieren und erste Ergebnisse der Fehlerbehebung zu bekommen;
d. eine gleichzeitige Fehlerbehebung (40) durch eine Überwachungssonde (125) des Dienstes auszuführen, um zweite Ergebnisse der Fehlerbehebung zu bekommen; und
e. die ersten Ergebnisse und die zweiten Ergebnisse zu korrelieren.

## Revendications

1. Procédé pour le dépannage de service dans un réseau (4, 5, 6), dans lequel un terminal (100) comprend un logiciel de dépannage, et dans lequel le terminal (100) est configuré pour se connecter à un réseau domestique (1) fournissant une connexion à un service, à un serveur (120) par l'intermédiaire d'un autre réseau et à un dispositif multi-accès (110), **caractérisé en ce que** le procédé comprend en outre de
a. fournir des paramètres liés au service au terminal (100) comprenant le logiciel de dépannage ;
b. mettre fin à une connexion au serveur (120) après avoir reçu les paramètres liés au service et récupérer une adresse IP à partir du dispositif multi-accès (110), laquelle adresse IP est valide tant que dure le test ;
c. exécuter le dépannage (30) par le logiciel de dépannage du terminal (100) avec lesdits paramètres liés au service afin d'émuler ledit service et d'avoir de premiers résultats du dépannage ;
d. exécuter un dépannage simultané (40) par une sonde de surveillance (125) du service pour avoir de seconds résultats du dépannage ; et
e. corréler les premiers résultats et les seconds résultats.

2. Procédé selon la revendication 1, **caractérisé en ce que**, à moins que le logiciel de dépannage a été installé sur le terminal (100), le logiciel de dépannage est téléchargé sur le terminal (100) avec les paramètres liés au service.

3. Procédé selon la revendication 1 ou 2, **caractérisé en ce que**, le dépannage est ciblé sur des points d'activation prédéfinis (310, 320, 410, 510, 520, 610, 620, 630) dans le réseau (4, 5, 6), lesdits points d'activation étant liés à au moins l'un des éléments suivants : ressource réseau, sonde de test, service client, réseau mobile, Internet, intranet d'entreprise, dorsale d'opérateurs, réseau d'accès.

4. Procédé selon l'une quelconque des revendications 1 à 3, **caractérisé en ce que** le terminal (100) est informé par le logiciel de dépannage d'un résultat du dépannage éventuellement avec les instructions sur la façon de procéder avec le résultat.

5. Procédé selon l'une quelconque des revendications 1 à 4, **caractérisé en ce que** le dépannage est exécuté à partir du terminal (100) par le biais du dispositif multi-accès (110) dans le réseau domestique (1), lequel dispositif multi-accès est configuré pour se connecter à plus d'un réseau en même temps.

6. Procédé selon l'une quelconque des revendications 1 à 5, **caractérisé en ce que** le logiciel de dépannage est exécuté par une commande de lancement d'un utilisateur, à partir d'une page WWW ou WAP ou à partir d'un serveur (120).

7. Procédé selon l'une quelconque des revendications 1 à 6, **caractérisé en ce qu'**un autre dépannage est effectué avec le terminal (100) par une sonde de surveillance (125).

8. Procédé selon l'une quelconque des revendications 1 à 7, **caractérisé en ce que** les paramètres liés au service sont fournis au terminal (100) par l'intermédiaire d'un réseau mobile.

9. Procédé selon la revendication 4, **caractérisé en ce qu'**un service client et/ou le serveur (120) est informé du résultat du dépannage.

10. Système de dépannage de service dans un réseau (4, 5, 6), comprenant au moins un réseau domestique (1), un serveur (120), un terminal (100) et un dispositif multi-accès (110), ledit terminal (100) étant conçu pour se connecter audit réseau domestique (1) fournissant une connexion à un service, au serveur (120) par l'intermédiaire d'un autre réseau et au dispositif multi-accès, **caractérisé en ce que**
a. le terminal (100) comprend un logiciel de dépannage ;
b. le serveur (120) est configuré pour fournir des paramètres liés au service au terminal (100) ;
c. le terminal (100) est configuré pour mettre fin à une connexion au serveur (120) après avoir reçu les paramètres liés au service et pour récupérer une adresse IP à partir du dispositif multi-accès (110), laquelle adresse IP est valide tant que dure le test ;
d. le terminal (100) est agencé pour exécuter un dépannage (30) par le logiciel de dépannage avec lesdits paramètres liés au service afin d'émuler ledit service et d'avoir de premiers résultats du dépannage ;
e. une sonde de surveillance (125) du service est agencée pour exécuter un dépannage simultané (40) pour avoir de seconds résultats du dépannage ; et
f. le serveur (120) est configuré pour corréler les premiers résultats et les seconds résultats.

11. Système selon la revendication 10, **caractérisé en ce que** le terminal (110) est conçu pour télécharger le logiciel de dépannage avec les paramètres liés au service.

12. Système selon la revendication 10 ou 11, **caractérisé en ce que** le système est agencé pour cibler le dépannage sur des points d'activation prédéfinis (310, 320, 410, 510, 520, 610, 620, 630) dans le réseau (4, 5, 6), lesdits points d'activation étant liés à au moins l'un des éléments suivants : ressource réseau, sonde de test, service client, réseau mobile, Internet, intranet d'entreprise, dorsale d'opérateurs, réseau d'accès.

13. Système selon la revendication 10, 11 ou 12, **caractérisé en ce que** le logiciel de dépannage est conçu pour informer le terminal (100) d'un résultat du dépannage éventuellement avec les instructions sur la façon de procéder avec le résultat.

14. Système selon l'une quelconque des revendications 10 à 13, **caractérisé en ce que** le système est agencé pour exécuter le dépannage par l'intermédiaire du dispositif multi-accès (110), lequel dispositif multi-accès est configuré pour se connecter à plus d'un réseau en même temps.

15. Système selon l'une quelconque des revendications 10 à 14, **caractérisé en ce que** le terminal (100) est agencé pour exécuter le logiciel de dépannage par une commande de lancement d'un utilisateur ou par une commande de lancement d'une page WWW ou WAP ou une commande de lancement à partir du serveur.

16. Système selon l'une quelconque des revendications 10 à 15, **caractérisé en ce que** le système comprend une sonde de surveillance (125) pour effectuer un dépannage avec le terminal (100).

17. Système selon l'une quelconque des revendications 10 à 16, **caractérisé en ce que** le serveur (120) est conçu pour fournir les paramètres liés au service au terminal (100) par l'intermédiaire d'un réseau mobile.

18. Système selon l'une quelconque des revendications 13 à 17, **caractérisé en ce que** le terminal (100) est conçu pour informer le service client et/ou le serveur (120) du résultat du dépannage.

19. Produit de programme d'ordinateur pour un système comprenant un terminal (100) et un serveur (120), ledit terminal (100) étant conçu pour se connecter à un réseau domestique (1) fournissant une connexion à un service, à un dispositif multi-accès (110) et à un serveur (120) par l'intermédiaire d'un autre réseau, ledit produit de programme d'ordinateur comprenant des moyens de code stockés sur un support lisible, conçus, lorsqu'ils sont exécutés sur un ordinateur, pour dépanner un service dans un réseau (4, 5, 6), **caractérisé en ce que** les moyens de code sont conçus pour
a. fournir des paramètres liés au service au terminal (100) comprenant le logiciel de dépannage ;
b. mettre fin à une connexion au serveur (120) après avoir reçu les paramètres liés au service et récupérer une adresse IP à partir du dispositif multi-accès (110), laquelle adresse IP est valide tant que dure le test ;
c. exécuter le dépannage (30) par le logiciel de dépannage du terminal (100) avec lesdits paramètres liés au service afin d'émuler ledit service et d'avoir les premiers résultats du dépannage ;
d. exécuter un dépannage simultané (40) par une sonde de surveillance (125) du service pour avoir de seconds résultats du dépannage ; et
e. corréler les premiers résultats et les seconds résultats.
